# EUROPEAN PATENT SPECIFICATION

(11) **EP 2 733 476 B1**
(45) Date of publication and mention of the grant of the patent: **12.06.2019**
(21) Application number: 13185116.4
(22) Date of filing: 19.09.2013
(51) Int. Cl.: G01N 1/28, G01N 35/02, G01N 15/14, G01N 1/40

(54) **Sample preparation apparatus and sample preparation method**
Probenvorbereitungsvorrichtung und Probenverarbeitungsverfahren
Appareil de préparation d'échantillon et procédé de préparation d'échantillons

(30) Priority: 28.09.2012 JP 2012217636
(43) Date of publication of application: 21.05.2014
(73) Proprietor: SYSMEX CORPORATION, Kobe-shi, Hyogo 651-0073 (JP)
(72) Inventor: Ebi, Ryuichiro, Hyogo, 651-0073 (JP); Tajima, Koki, Hyogo, 651-0073 (JP); Suganuma, Toshikuni, Hyogo, 651-0073 (JP)
(74) Representative: Hoffmann Eitle

(56) References cited:
- GB-A- 2 392 854
- US-A1- 2011 076 755

## Description

### FIELD OF THE INVENTION

The present invention relates to a sample preparation apparatus and method capable of preparing a sample from cells collected from a subject.

### BACKGROUND

Conventional cell analyzers are known for analyzing cells contained in biological samples collected from a living body. For example, US Patent Application Publication No. 2008/108103 discloses a cell analyzer which determines the progression of conditions of malignancies based on measurement results obtained by using a flow cytometer to measure epithelial cells contained in a sample collected from the cervix of a subject.

In this cell analyzer, it is preferable to use a large number of cells to be analyzed to increase the accuracy of analysis when performing analysis of individual cells. US Patent Application Publication No. 2011/076755 discloses a sample preparation apparatus which is capable of increasing the number of cells per unit volume supplied for analysis by increasing the concentration of the cells contained in a sample.

This sample preparation apparatus has a receiving chamber for accommodating a sample when the top surface is released, a cylindrical piston which has a filter loaded at the bottom end surface that is inserted into the receiving chamber, an aspirating tube for aspirating a liquid that penetrates to the interior of the piston through the filter, and a stirrer disposed at the bottom of the receiving chamber. In the process of concentrating the sample, the piston is first inserted into the receiving chamber to inject a sample. Thereafter, the piston is inserted in the receiving chamber until the filter is immersed in the sample. The liquid leaking into the piston is aspirated by the aspirating tube and then removed from the receiving chamber. The cells to be analyzed adhere to the bottom surface of the filter and do not pass through the filter. The cells adhered to the bottom surface of the filter are detached from the filter by suitably operating the stirrer. The sample remaining in the receiving chamber now contains a high concentration of cells to be analyzed. The sample remaining in the receiving chamber is aspirated by a pipette for analysis.

In the sample preparation apparatus disclosed in US Patent Application Publication No. 2011/076755 , the filter must be removed from the moving pass of the pipette when the pipette discharges the sample into the receiving chamber. The filter also must be removed from the movement path of the pipette when the sample remaining in the receiving part is aspirated by the pipette after filtration of the sample by the filter. It is therefore difficult to rapidly obtain a concentrated sample.

### SUMMARY OF THE INVENTION

The scope of the present invention is defined solely by the appended claims, and is not affected to any degree by the statements within this summary.

A first embodiment of the invention relates to a sample preparation apparatus. The sample preparation apparatus of this embodiment is defined in claim 1.

The sample preparation apparatus of this embodiment is capable of rapidly positioning the pipette at the first receiving part to discharge sample into the first receiving part and aspirate liquid concentrate moved to the first receiving part regardless of the position of the filter part because the first receiving part in which the pipette discharges the sample and the second receiving part in which the filter concentrates the sample are disposed at mutually separated positions in the visual plane. Hence, the sample containing the concentrated cells to be analyzed can be rapidly obtained.

The sample preparation apparatus of this embodiment is also provided with a detaching means for detaching the cells to be analyzed that adhere to the filter part from the filter part.

The filter part is arranged so that the filtration surface is approximately parallel to the vertical direction in the sample preparation apparatus of this embodiment. Hence, the sample preparation apparatus is more compact in the horizontal direction compared to when the filtration surface of the filter part is arranged parallel to the horizontal direction. It is therefore possible to reduce the surface area needed for the installation of the cell analyzer which is provided with the sample preparation apparatus. The cells adhered to the filter part are easily removed from the filter by gravity.

The positions of the first receiving part, the second receiving part and the flow path are adjustable so that the first connective aperture of the flow path at the first receiving part is lower than the second connective aperture of the flow path at the second receiving part in the sample preparation apparatus of the present embodiment. Hence, the sample stored in the second receiving part moves to the first receiving part via the force of gravity. The sample therefore can be moved from the second receiving part to the first receiving part even though a separate drive force is not provided.

The second moving means includes a vent for releasing the atmosphere within the third receiving part, and a valve for opening and closing the vent, and moves the sample containing the cells to be analyzed present within the second receiving part to the first receiving part by opening the vent via the valve.

The second connective aperture is arranged at the lowest position of the second receiving part. Hence, the sample is easily moved from the second receiving part to the first receiving part.

The first receiving part is configured so that the interior gradually becomes narrower in the depth direction, and the first connective aperture is arranged at a position in the deepest part of the first receiving part so that the pipette for aspirating the concentrated sample can be inserted at the position in the deepest part of the first receiving part. Thus, the concentrated sample can effectively collect in the first receiving part and the concentrated sample accumulated in the first receiving part can be smoothly aspirated.

In the sample preparation apparatus of the present embodiment, the filter part is fixed between the second receiving part and the third receiving part, and the first moving means is configured with a pressure application part for applying a pressure within the third receiving part to move the sample accommodated in the second receiving part through the filter part and into the third receiving part. Hence, the structure of the sample preparation apparatus can be simplified since it is unnecessary to move the filter part during the sample concentration process.

The sample preparation apparatus of the present embodiment is also configured with a rotary member arranged within the second receiving part to rotate along the side surface of the filter part on the second receiving part side. Hence, the cells adhered to the filter part can be smoothly detached from the filter part.

The sample preparation apparatus of the present embodiment also has an insertion opening to allow the insertion of the filter part between the second receiving part and the third receiving part. Thus, the used filter part can be easily replaced through the insertion opening.

The sample preparation apparatus of the present embodiment also has a pressure affixing mechanism for pressing the filter part inserted from the insertion opening to the second receiving part and affixing the filter part to the second receiving part. Hence, the filter part can be fixed at a predetermined position by pressure fixing the filter part to a receiving part via the pressure affixing mechanism.

In the sample preparation apparatus of the present embodiment, the sample includes biological samples collected from the cervix, and the cells to be analyzed may be cervical epithelial cells.

The sample preparation apparatus of the present embodiment also has a liquid surface sensor unit for detecting the surface of a liquid accommodated in the first receiving part, and the first receiving part also includes a sensor that is connected to the liquid surface sensor unit.

In this case, a liquid surface sensor unit may be provided for detecting the surface of a liquid accommodated in the first receiving part, and the first receiving part also may be provided a first sensor and a second sensor that are connected to the liquid surface sensor unit, wherein the first sensor is disposed at the top of the second sensor in a vertical direction.

A second embodiment of the present invention relates to a sample preparation method. The method of this embodiment is defined in claim 15.

### BRIEF DESCRIPTION OF THE DRAWINGS

FIG. 1 is a perspective view showing an external view of an embodiment of a cancer information providing apparatus;
FIG. 2 is a plan view showing the internal structure of a measurement device of the embodiment;
FIG. 3 is a perspective view showing the structure of a discrimination/replacement unit of an embodiment;
FIG. 4 is a plan view showing the mechanism for driving a piston viewed from above and a side view of the motor of the embodiment;
FIG. 5 is a perspective view showing the structure of a container body of the embodiment, and a perspective view and side view of the container body cross section.
FIG. 6 is a perspective view showing the structure of the filter member, and perspective view showing the structure of the stirrer of an embodiment;
FIG. 7 is a side view and perspective view showing the structure of the piston of the embodiment;
FIG. 8 is a cross section view showing piston, support plate, filter member, stirrer and container body viewed through the center of axis plane;
FIG. 9 shows the sequence of installing the filter member of the present embodiment;
FIG. 10 shows the fluid processing unit of the measurement device of the embodiment;
FIG. 11 shows the structure of the measurement device of the embodiment;
FIG. 12 is a flow chart showing the analysis operation of the cancer information providing apparatus of the embodiment;
FIG. 13 is a flow chart showing the discrimination/replacement process of the embodiment; and
FIG. 14 schematically shows the container of the embodiment and the condition of the liquid within the empty space.

### DETAILED DESCRIPTION OF THE PREFERRED EMBODIMENTS

The preferred embodiments of the present invention will be described hereinafter with reference to the drawings.

The present embodiment is a cancer information providing apparatus (cell analyzer) which prepares measurement samples containing cells collected from subjects (patients), and obtains information relating to cancerous cells based on the prepared measurement samples. The cancer information providing apparatus 1 of the present embodiment of the embodiment is described below referring to the drawings.

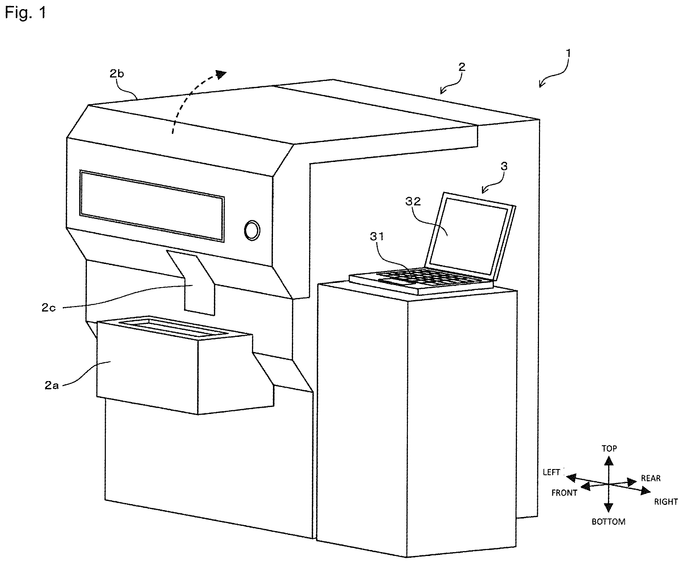

FIG. 1 is an exterior perspective view of a cancer information providing apparatus 1.

The cancer information providing apparatus 1 induces a measurement sample containing cells collected from a patient (hereinafter referred to as "analysis cells") to flow through the flow cell, and irradiates the measurement sample with laser light as the sample flows through the flow cell. The light (forward scattered light, side scattered light, and fluorescent light) from the measurement sample is then detected and the resulting optical signals are analyzed to determine whether the sample contains are cancerous or in a process of becoming cancerous. Specifically, the cancer information providing apparatus 1 is used when screening for cervical cancer using cervical epithelial cells collected from a subject.

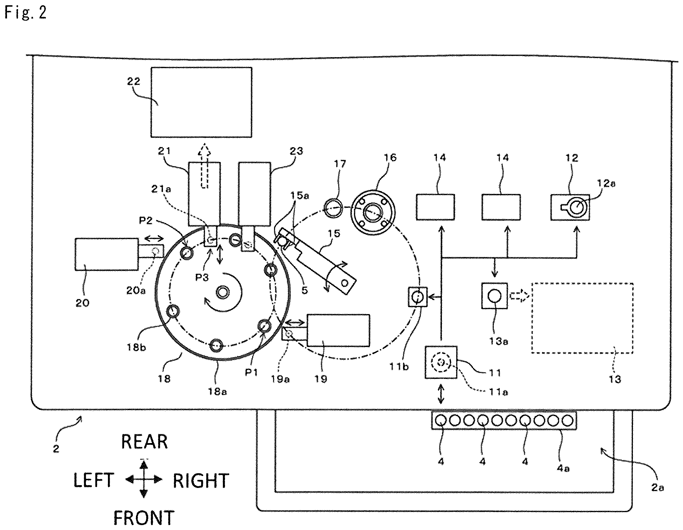

The cancer information providing apparatus 1 is configured by a measuring device 2 for performing measurements of analysis cells, and a data processing device 3 which is connected to the measuring device 2 and performs analyses of the measurement results. A sample receiver 2a capable of holding several sample containers 4 (refer to FIG. 2) is provided in front of the measuring device 2, and the sample container 4 contains a liquid mixture (sample) of cells collected from the cervix of a subject and a stock solution having methanol as the main component. The measuring device 2 also is provided with a cover 2b, and a user can access the interior of the measuring device 2 by lifting the cover 2b. The measuring device 2 is provided with an opening 2c for installing and removing a sample pipette unit 11 which is described later. The data processing device 3 is configured by an input unit 31 for receiving instructions from a user, and a display unit 32 for showing the analysis results and the like.

FIG. 2 is plan view showing the interior part of the measuring device 2.

The sample receiver 2a sequentially transports the racks 4a which hold a plurality of sample containers 4to the sample aspirating position of the sample pipette unit 11. The sample pipette unit 11 has a pipette 11a which extends in a vertical direction; the pipette 11a is movable in the vertical and horizontal directions to aspirate and discharge the sample.

When the sample container 4 is set at the aspirating position of the sample receiver 2a, the sample in the container 4 is aspirated by the sample pipette 11, and discharged into the sample receiving part 12a of the first dispersing part 12. The first dispersing part 12 disperses the aggregated cells contained in the sample by applying a shearing force. The sample which has been processed (first dispersion process) by the first dispersing part 12 is then aspirated by the sample pipette unit 11 and discharged into the sample capture unit 13a of the sub sensor unit 13. The sub sensor unit 13 has a flow cytometer which measures the concentration of the sample by detecting (pre-measurement) the number of analysis cells. The amount of the sample to be aspirated for the main measurement by the main detecting unit 22 is determined based on the concentration measurement.

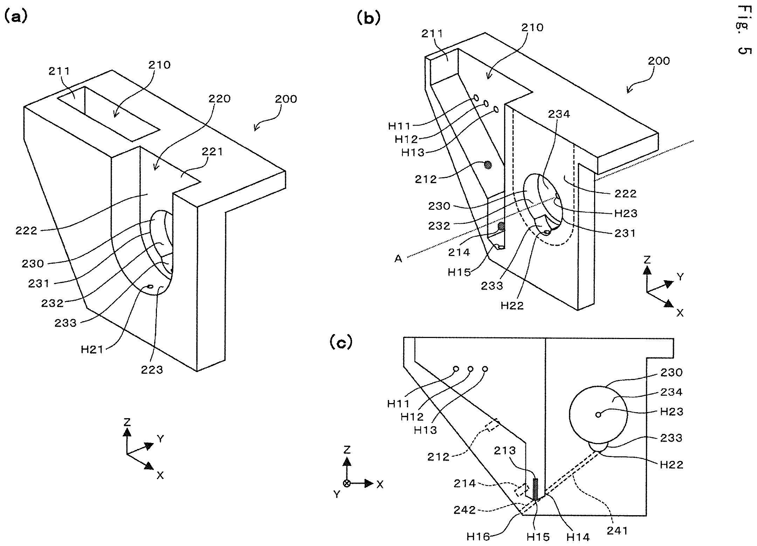

The sample in the sample receiving part 12a of the first dispersing unit 12 is aspirated by the sample pipette unit 11 in the amount determined above, and the aspirated sample is then discharged in the receiving part 210 (refer to FIG. 5(a)) of the discrimination/replacement unit 14. Two discrimination/replacement units 14 are provided to perform processing in parallel.

The discrimination/replacement unit 14 replaces the stock solution having a main component of methanol in the sample with diluting liquid. That is, the discrimination/replacement unit 14 performs processing to dilute the concentration of the methanol in the sample using the diluting liquid to ideally perform the cell staining process in the next process. Tris-HCL is used as the diluting liquid. The discrimination replacement unit 14 also discriminates the analysis cells (cervical epithelial cells), other cells (erythrocytes, leukocytes, bacteria and the like), and foreign substances in the sample. Thus, a concentrate of concentrated analysis cells is obtained which contains the number of cells required for cancer cell detection. Details of the structure of the discrimination/replacement unit 14 are described later.

The measurement sample container 5 arranged in the retainer 18b of the reactor 18 is then grasped by the tapered holder 15a of the container transporter 15 and positioned at the sample transfer part 11b. The concentrate in the receiving part 210 of the discrimination/replacement unit 14 is then aspirated by the sample pipette unit 11, and discharged into the measurement sample container 5 positioned in the sample transfer part 11b. The container transporter 15 moves the measurement sample container 5 to the second dispersing part 16.

The second dispersing part 16 applies ultrasonic waves to the concentrated sample in the discrimination/replacement unit 14. Hence, the aggregated cells remaining after the first dispersion process are dispersed. After processing by the second dispersing unit 16 (second dispersion process), the measurement sample container 5 is moved to the liquid removal unit 17 by the container transporter 15. The liquid removal unit 17 removes the liquid component (moisture reduction) adhered to the outer surface of the measurement sample container 5. After processing by the liquid removal unit 17, the measurement sample container 5 is moved to the retainer 18b of the reactor 18 by the container transporter 15.

The reactor 18 heats the measurement sample container 5 held in the retainer 18b to a predetermined temperature (approximately 37 degrees) to promote a reaction between the sample in the measurement sample container 5 and a reagent added by the first reagent adding unit 19 and the second reagent adding unit 20. The reactor 18 has a rotatable circular table 18a, and a plurality of retainers 18b are provided along the circumference of the rotating table 18a to receive measurement sample containers 5.

The first reagent adding unit 19 and the second reagent adding unit 20 have suppliers 19a and 20a, respectively, which are movable to positions P1 and P2, respectively, above the measurement sample container 5 disposed on the rotating table 18a. The first reagent adding unit 19 and the second reagent adding unit 20 add a predetermined amount of reagent from the supplier 19a or 20a into the measurement sample container 5 when the measurement sample container 5 is moved to position P1 or P2 via the rotating table 18a.

The reagent added by the first reagent adding unit 19 is RNase which is used for RNA removal processing of cells, and the reagent added by the second reagent adding unit 20 is stain used for DNA staining of cells. RNA removal processing breaks down the RNA in the cells to allow measurement of only the DNA of the cell nucleus. The DNA staining process is performed using propidium iodide (PI), which is a fluorescent stain containing pigment. The DNA staining process selectively stains the nucleus in the cell. Hence, fluorescent light from the nucleus can be detected.

The sample aspirator 21 has a pipette 21a which is movable to a position P3 above the measurement sample container 5 on the rotating table 18a, and this sample aspirator 21 aspirates the sample in the measurement sample container 5 when the measurement sample container 5 has been transported to the position P3 by the rotating table 18a. The sample aspirator 21 is connected to the flow cell of the main detection unit 22 through a flow path which is not shown in the drawing, and supplies the measurement sample aspirated by the pipette 21a to the flow cell of the main detection unit 22.

The main detection unit 22 has a flow cytometer for detecting light (forward scattered light, side scattered light, fluorescent light) from the measurement sample, and outputs signals based on each type of light to circuits which are described later. A container washing unit 23 washes the interior of the measurement sample container 5 after the measurement sample has been supplied to the main detection unit 22 by the sample aspirator 21 by discharging washing solution into the measurement sample container 5 disposed on the rotating table 18a.

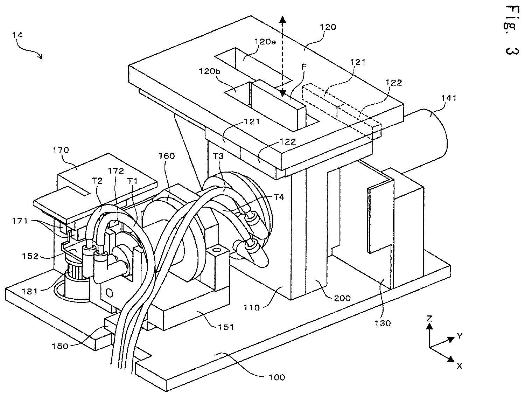

FIG. 3 is a perspective view showing the structure of the discrimination/replacement unit 14. In FIG. 3, the Z axis direction is vertical, and the Z axis positive direction and Z axis negative direction the upward direction and downward direction, respectively.

A base 100 is a plate-like member parallel to the XY plane. A container body 200, support members 110, 130, 170, and rail 150 are provided above the base 100. Note that various mechanisms are also provided on the base 100. These various mechanisms are omitted in FIG. 3 for clarity.

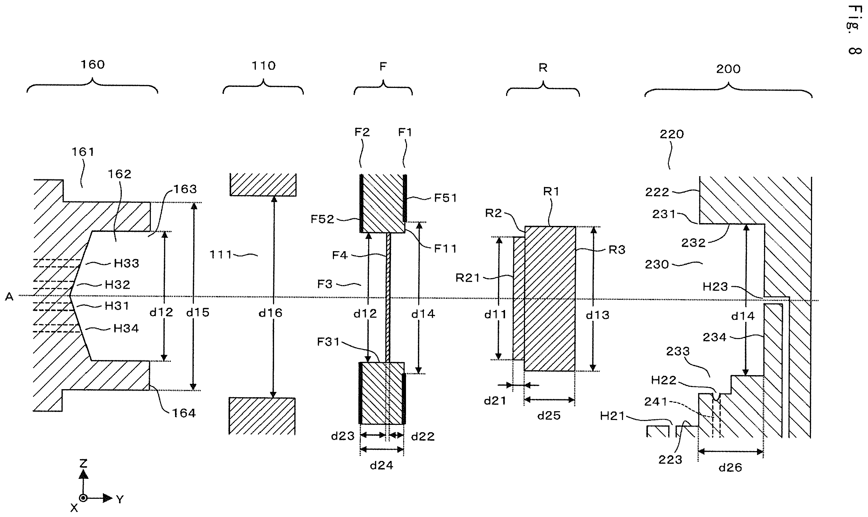

The support member 110 is a plate-like member parallel to the XZ plane. The support member 110 has a hole 111 (refer to FIG. 8) formed therein which passes through in the Y axis direction. A top plate 120 is provided on the top surface of the container body 200 and the support member 110. The top plate 120 is positioned within the measurement device 2 so as to allow the user access to the top plate when the cover 2b (refer to FIG. 1) of the measurement device 2 is raised.

The top plate 120 has through holes 120a and 120b in the vertical direction. The pipette 11a of the sample pipette unit 11 aspirates and discharges sample to/from the receiving part 210 of the container body 200 (described later) through the hole 120a. The user opens the cover 1b of the measurement device 2, and installs and removes the filter member F in the container part 220 of the container body 200 (described later) through the hole 120b along the dashed arrow (vertical direction).

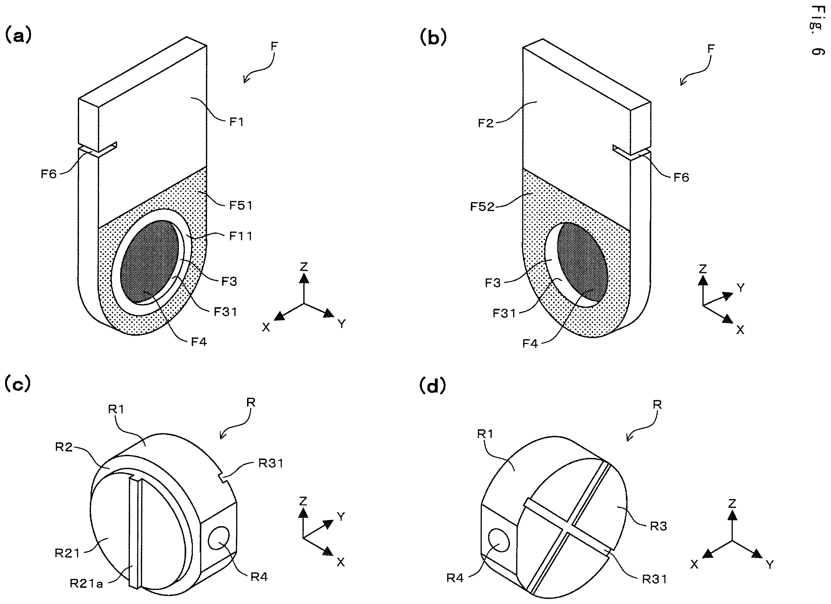

The top plate 120 is a translucent member. Sensors 121 and 122 which are configured by light emitters and light receivers are provided on the top plate 120. When the filter member F is properly installed, light emitted from the light emitter of the sensor 121 is blocked by the filter member F. The light emitted from the light emitters of the sensor 122 passes through slot F6 (refer to FIG. 6(a) and (b)) of the filter member F. When the filter member F is installed with the surfaces F1 and F2 (refer to FIG. 6(a) and (b)) of the filter member F facing opposite directions, the light emitted from the light emitter of the sensors 121 and 122 is blocked by the filter member F. The proper installation of the filter member F thus can be determined.

The support member 130 supports a motor 141. A support member 151 is arranged on the rail 150 so as to be oscillatable in the Y axis direction. A flange 152 and a piston 160 are provided on the support member 151. Tubes T1 through T4 are connected to the piston 160. Sensors 171 and 172 which are configured by light emitters and light receivers are provided on the support member 170.

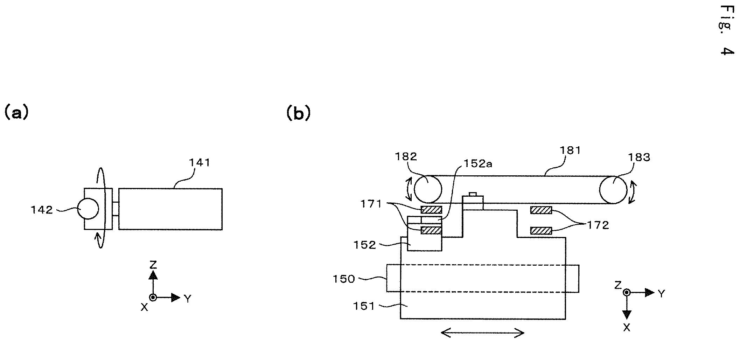

FIG. 4(a) is a side view of the motor 141. The rotational axis of the motor 141 is parallel to the Y axis, and matches the center axis A which is described later. A magnet 142 is attached to the leading end of the motor 141 in the Y axis negative direction. The stirrer R which is described later is rotated through the wall of the container body 200 by driving the motor 141 to rotate the magnet 142 in the XZ plane.

FIG. 4(b) is a plan view illustrating the mechanism for driving the piston 160 viewed from above. The illustration of the piston 160 in FIG. 4(b) is omitted. The support member 151 is attached to the belt 181. The belt 181 is supported by the pulleys 182 and 183. The pulley 182 is connected to the rotating shaft of a step motor mounted on the bottom surface side of the base 100. When the step motor is actuated, the support member 151 is oscillated on the rail 150 in the Y axis direction, and the piston 160 is driven in the Y axis direction. Sensors 171 and 172 are positioned to detect the shield 152a of the flange 152 provided on the support member 151. The piston 160 positioned on the leftmost side and positioned on the rightmost side can be detected by the detection signals of the sensors 171 and 172.

FIG. 5(a) is a perspective view showing the structure of the container body 200. FIG. 5(b) is a perspective view of the cross section of the container body 200 on the plane that includes the wall 222 in FIG. 5(a). FIG. 5(c) is a side view of the container body 200 shown in FIG. 5(b) viewed in the Y axis positive direction.

Refer now to FIG. 5(a). Receiving parts 210 and 220 are formed in the container body 200. An insertion opening 211 is positioned at the top part of the receiving part 210, and is linked to a hole 120a of the top plate 120. An insertion opening 221 is positioned at the top part of the receiving part 220, and is linked to a hole 120b of the top plate 120. The receiving part 220 has a wall 222 parallel to the XZ plane, and a concavity 230 for accommodating the stirrer R (described later) is formed in the wall 222. The bottom surface 223 of the receiving part 220 is curved. A hole H21 is formed at the lowest position of the bottom surface 223. The side of the receiving part 220 is open in the Y axis negative direction.

Refer now to FIG. 5(b) and (c). The concavity 230 has an aperture 231 which opens concavity 230 on the Y axis negative side, a circular inner surface 232 viewed in the Y axis direction, reservoir 233 formed below the inner surface 232, and wall 234 parallel to the XZ plane. The concavity 230 is separated from the container part 210 in planar view, that is, in the direction within the XY plane (horizontal direction). The center axis A indicated by the dotted line in FIG. 5(b) passes through the center of the circular shape when the inner wall 232 is viewed in the Y axis direction, that is, the axis is parallel to the Y axis direction. The reservoir 233 is formed as a concavity in a direction from the center axis A on the inner surface 232. A hole H22 is formed at the lowest position of the reservoir 233. A hole H23 is formed in the wall 234 at a position at which the center axis A intersects the wall 234.

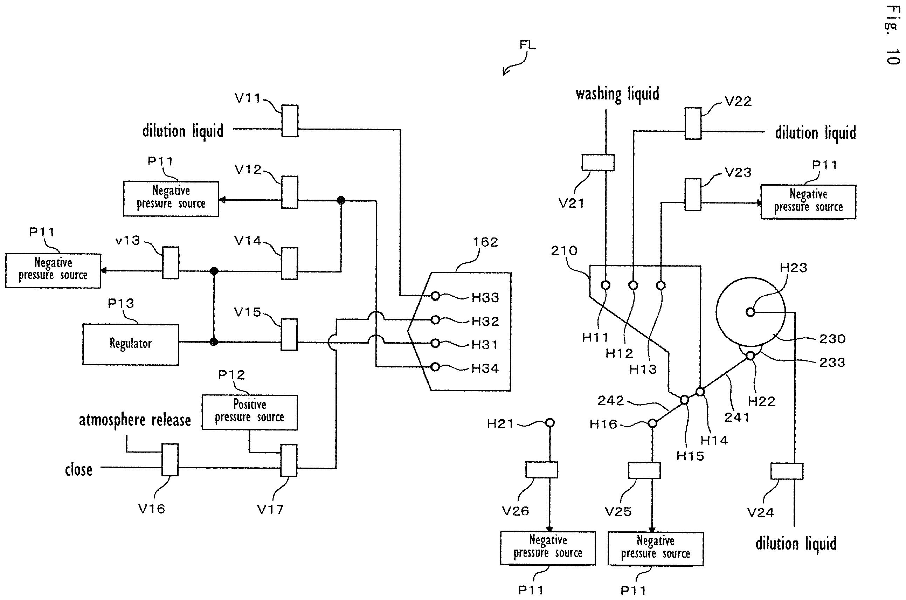

The receiving part 210 is shaped so that the inner part gradually becomes narrower in the depth direction. Holes H11 through H13 are formed in the top part of the inner surface of the receiving part 210. Holes H14 and H15 are formed in the innermost part of the receiving part 210. The hole H14 is connected through the flow path 241 to the hole H22 of the reservoir 233. The hole H15 is connected through the flow path 242 to the hole H16 formed in the outer surface of the container body 200. The disposition of the receiving part 210, concavity 230, and flow path 241 are adjusted so that the hole H14 is lower than the hole H22. Note that the hole H16 is connected to the valve V25 (refer to FIG. 10), and the diameter of the flow path 242 is sufficiently small. The sample held in the receiving part 210 therefore does not flow downward from the hole H15.

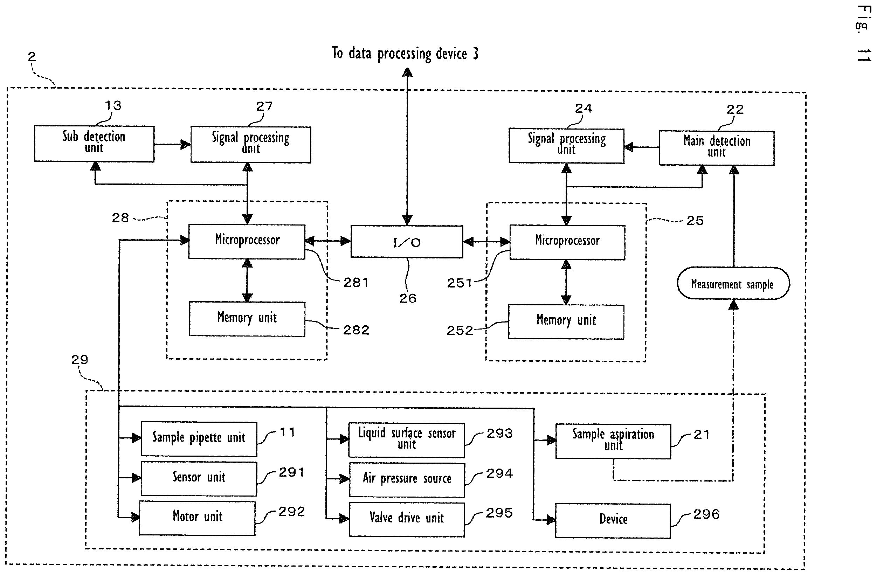

Pins 212 through 214 are provided in the receiving part 210. The pins 212 through 214 are connected to a resistance type liquid level sensor 293 (refer to FIG. 11). The liquid surface sensor 293 detects whether the surface of the liquid in the receiving part 210 is above the height of the position of the pin 212 based on the state of the current flow of the pins 212 and 214. The liquid surface sensor 293 detects whether the surface of the liquid in the receiving part 210 is above the height of the position of the pin 213 based on the current flow of the pins 213 and 214.

FIG. 6(a) and (b) are perspective views showing the structure of the filter member F. FIG. 6(a) and (b) show the coordinate axes of the properly placed filter member F relative to the receiving part 210.

The filter member F has surfaces F1 and F2 parallel to the XZ plane, holes F3 passing through the filter member F in the Y axis direction, filter F4, thin film rubber F51 installed on the surface F1, and thin film rubber F52 installed on the surface F2. Surfaces F1 and F2 are positioned on the Y axis positive side and the Y axis negative side, respectively. The hole F3 has a cylindrical inner surface G31. The filter F4 is installed so that the filter surface is parallel to the XZ plane relative to the inner surface F31 of the hole F3. The filter F4 has pores of a certain diameter such that cells and the like (erythrocytes, leukocytes, bacteria, foreign substances) which have a diameter smaller than analysis cells (cervical epithelial cells) pass through the filter F4, whereas analysis cells cannot pass through. The distance between the filter F4 and the surface F1 in the Y axis direction is less than the distance between the filter F4 and the surface F2. The rubber F51 is installed around the circumference of the opening of the hole F3 on the surface F1 side, and the surface F11 which is part of the surface F1 is exposed between the rubber F51 and the opening of the hole F3 on the surface F1 side. The rubber F52 is installed around the circumference of the opening of the hole F3 on the surface F2 side.

FIG. 6(c) and (d) are perspective views showing the structure of the stirrer R. FIG. 6(c) and (d) show the coordinate axes of the stirrer R accommodated in the concavity 230.

The stirrer R has a cylindrical body R1, surfaces R2 and R3 parallel to the XZ axis, and a magnet R4. Surfaces R2 and R3 are positioned on the Axis negative direction side and the Y axis positive direction side, respectively. A convexity R21 protrudes from the surface R2 in the Y axis negative direction. The diameter of the convexity R21 is smaller than the diameter of the periphery of the surface R2. A flange R21a is formed on the concavity R21. A channel R31 is formed to intersect the center of the surface R3. The magnet R4 is arranged to pass through the stirrer R within the XZ plane through the center of the stirrer R. Thus, the stirrer R rotates on the Y axis when a motor 141 rotates the magnet 142 shown in FIG. 4(a).

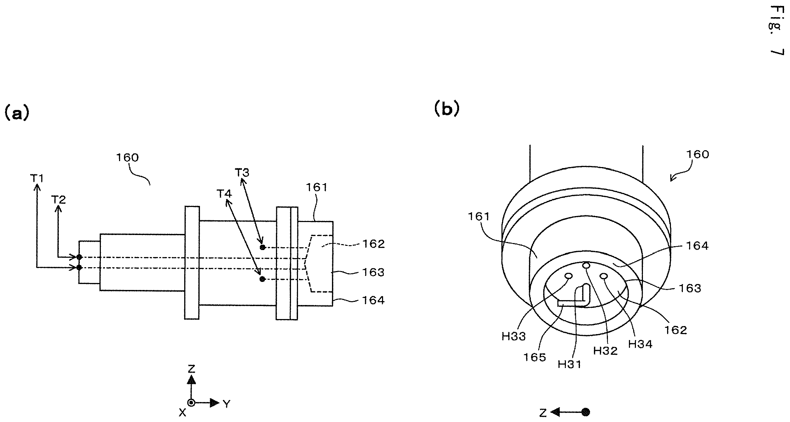

FIG. 7(a) and (b) are side view and perspective view, respectively, showing the structure of the piston 160.

The piston 160 has a rod-like tip 161 in the Y axis positive direction. The top 161 on the Y axis positive side has a concavity 162, opening 163 which opens the concavity 162 in the Y axis positive direction, and surface 164. An opening 163 which opens Holes H31 through H34 are formed on the surface of the concavity 162 on the Y axis negative side. The holes H31 through H34 are respectively connected to tubes T1 through T4 through a flow path provided inside the piston 160. An L-shaped pipe 165 is connected to the hole H31. The tip of the pipe 165 is positioned at the top part (the side in the Z axis positive direction) inside the concavity 162. The surface 164 is parallel to the XZ plane and is formed on the periphery of the opening 163.

FIG. 8 is a cross section view of the piston 160, support member 110, filter member F, stirrer R, and container body 200 viewed on the YZ plane through the center axis A. FIG. 8 shows the spacing of each part in the Y axis direction. Reference numbers d11 through d16 indicate the length in the Z axis direction, and the values increase in this sequence. Reference numbers d21 through d26 indicate the length in the Y axis direction, and the values increase in this sequence.

The concavity 162 in the piston 160 has a diameter d12, and the circumference of the surface 164 has a diameter d15. The hole 111 in the support member 110 has a diameter d16. The hole F3 in the filter member F has a diameter d12. The circumference of the surface F11 has a diameter d14. The distance between the surface F1 and the filter F4 is d22. The distance between the surface F2 and the filter F4 is d23. The distance between surfaces F1 and F2 is d24. The body R1 in the stirrer R has a diameter d13. The convexity R21 has a diameter d11. The body R1 has a width d25. The convexity R21 including the flange R21a has a width d21. The internal surface 232 in the container body 200 has a diameter d14. The concavity 230 has a diameter d26.

Note that the concavity 162, circumference of surface 164, holes 111 and F3, circumference of surface F11, body R1, convexity R21, and concavity 230 are circular when viewed from the Y axis direction. The center of the circular shapes coincides with the center axis A.

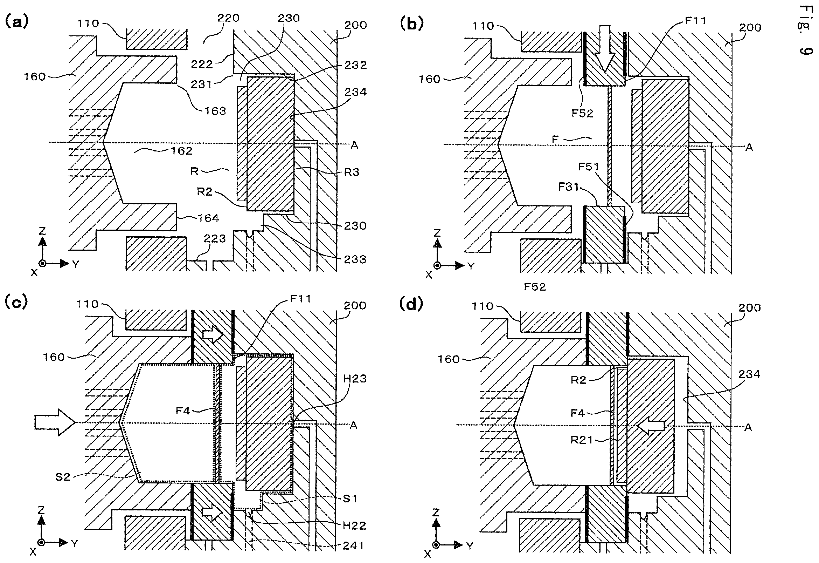

FIG. 9(a) through (d) shows the sequence of the installation of the filter member F in the receiving part 220. FIG. 9(a) through (d) are cross sectional views similar to FIG. 8.

FIG. 9(a) shows the condition when the filter member F is not installed in the receiving part 220. The piston 160 is prepositioned at the leftmost side at this time, and the surface R3 of the stirrer R pulled further to the rightward direction by the magnet 142 (refer to FIG. 4(a)) and grounded at the wall 234. When the filter member F is inserted into the receiving part 220 through the hole 120b of the top plate 120 and the insertion opening 221 of the receiving part 220, the condition changes from that shown in FIG. 9(a) to the condition shown in FIG. 9(b). The filter member F is supported in the upward direction by the bottom surface 223 of the receiving part 220.

When the piston 160 positioned on the rightmost side as shown in FIG. 9(b), the surface 164 of the piston 160 presses against the rubber F52 of the filter member F, and the rubber F51 of the filter member F presses against the wall 222 of the receiving part 220 as shown in FIG. 9(c). Hence, the concavity 230 and the concavity 162 are combined through the filter F4. At this time a space S1 which is closed to the outside is formed by blocking the opening 231 of the concavity 230 via the filter member F. A space S2 which is closed to the outside is also formed by blocking the opening 163 of the concavity 162 via the filter member F.

Specifically, the space S1 is formed by the side surface of the filter F4 on the concavity 230 side, inner surface F31, surface F11, rubber F51, inner surface 232, reservoir 233, and wall 234. The space S1 is structurally linked to the outside at this time through the holes H22 and H23. During the discrimination/replacement process, however, the hole H22 is actually closed because the sample is stored in the deepest part of the receiving part 210 positioned at the tip of the flow path 241 to which the hole H11 abuts. The valve V24 (refer to FIG. 10), which is configured to be capable of closing the flow path is installed in the flow path linked to the hole H23, and the hole H23 is actually closed due to the diluting liquid flowing through the hole H23 from the outside into the space S1. Thus, the space S1 is closed to the outside.

As described above, the filter F4 has pores of a diameter which allows cells having size smaller than the analysis cells to pass through, but does not allow the analysis cells to pass through. Cells smaller than the analysis cells in the space S1 therefore pass through the filter F4, and the analysis cells in the space S1 remain in the space S1.

Specifically, the space S2 is formed by the side surface of the filter F4 opposite the concavity 230, inner surface F31, rubber F52, and concavity 162. The space S2 is structurally linked to the outside at this time through the holes H31 through H34. The holes H31 through H34 are in a closed state because a value capable of closing the flow path is installed in the flow path linked to the holes H31 through H34. Thus, the space S2 is closed to the outside.

In the condition shown in FIG. 9(c), the stirrer R is rotated along the side surface (filtration surface) of the filter F4 on the concavity 230 side centered on the center axis A by rotating the magnet 142 (refer to FIG. 4(a)). Recall that a channel R31 is formed in the flat surface R3 of the stirrer R as shown in FIG. 6(d). The diluting liquid therefore smoothly flows into the space S1 from the hole H23.

The stirrer R separates from the wall 234 toward the filter member F as shown in FIG. 9(d) when rotated by the magnet 142. As shown in FIG. 8, the width d21 of the convexity R21 which includes the flange R21a is smaller than the space d22 between the surface F11 and the filter F4. The diameter d11 of the convexity R21 is smaller than the diameter d14 of the hole F3. The circumference (diameter of the body R1) d13 of the surface R2 is also larger than the diameter d14 of the hole F3. Therefore, the convexity R21 including the flange R21a abuts the filter F4 while damage to the filter F4 is prevented by the surface R2 abutting the surface F11 as shown in FIG. 9(d).

FIG. 10 shows the fluid processing unit FL of the measuring device 2.

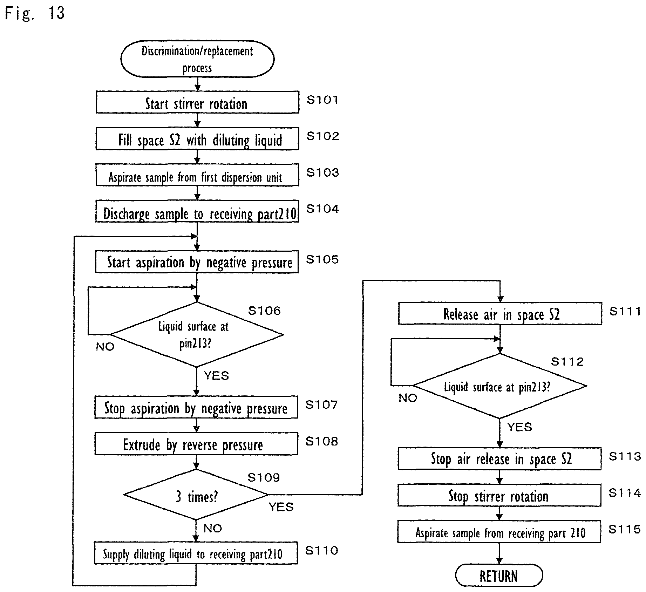

The valves V11 through V15 and V21 through V26 are configured to switch between a state to open the flow path and a state to close the flow path. The valves V16 and V17 are configured to connect to any flow path connected on the left side relative to one flow path on the right side. Holes H31 through H34 are respectively connected to valve V15, valve V17, valve V11, and valves V12 and V14. Holes H11 through H13 are respectively connected to valves V21 through V23. Holes H23, H16, and H21 are respectively connected to valves V24, V25, and V26. A negative pressure source P11 is connected to valves V12, V13, V23, V25, and V26, and a positive pressure source is connected to Valve V17. A regulator P13 is connected to the valves V13 through V15 to regularize the pressure. The actuation of the fluid processing unit FL and the movement of the fluid in the fluid processing unit FL are described below referring to FIG. 13.

FIG. 11 shows the structure of the measuring device 2.

The measuring device 2 includes a main detection unit 22, sub detection unit 12, and preparation device 29 which incorporates each part for automatically preparing a sample as described above and shown in FIG. 2. The measuring device 2 also includes a signal processing unit 24, measurement controller 25, I/O interface 26, signal processing unit 27 and preparation controller 28.

The main detection unit 22 outputs forward scattered light signals (FSC), side scattered light signals (SSC), and fluorescent light signals from the measurement sample. The side scattered fluorescent light signal (SFL) is used as the fluorescent light signal. The signal processing unit 24 processes the signals FSC, SSC, and SFL output from the main detection unit 22, and outputs the result to the measurement controller 25. The measurement controller 25 includes a microprocessor 251 and a memory unit 252. The microprocessor 251 is connected to the data processing device 3 and the preparation controller 28 through the I/O interface 26. The signals FSC, SSC, and SFL are transmitted to the data processing device 3 by the microprocessor 251.

Note that the data processing device 3 obtains the characteristic parameters of the forward scattered light intensity and the side fluorescent light intensity based on the signals FSC, SSC, SFL, and generates frequency distribution data for analyzing the cell and nucleus based on the characteristic parameters. The data processing device 3 performs the discrimination process on particles in the measurement sample based on the frequency distribution data, and determines whether the analysis cells are abnormal, that is, specifically cancerous cells (atypical cells).

The sub detection unit 13 is configured to obtain the forward scattered light signal (FSC), and outputs signals for counting the number of cells of sufficient size to correspond to surface layer cells and intermediate layer cells. The signal processing unit 27 processes the signal FSC output from the sub detection unit 13 to the preparation controller 28. The preparation controller 28 includes a microprocessor 281 and a memory unit 282. The microprocessor 281 is connected to the preparation device 29, and is connected to the data processing device 3 and the measurement controller 25 through the I/O interface 26.

The preparation device 29 includes a sensor unit 291, motor 292, liquid surface sensor 293, air pressure source 294, valve drive unit 295, and sample pipette unit 11 and sample aspirating unit 21 shown in FIG. 2. The device unit 296 incorporates the other devices shown in FIG. 2. Each part of the preparation device 29 is controlled by the preparation control unit 28, and the signals output from each part of the preparation device 29 are output to the preparation control unit 28.

The sensor unit 291 includes the sensors 121, 122, 171, and 172 shown in FIG. 3. The motor unit 292 includes a motor 141 shown in FIG. 4(a), and a step motor connected to a pulley 182 shown in FIG. 4(b). The liquid surface sensor unit 293 is connected to pins 212 through 214 shown in FIG. 5(c). The air pressure source 294 includes a negative pressure source P11, positive pressure source P12, and positive pressure source for the flow of the liquid (diluting liquid, washing solution) within the fluid processing unit FL. The valve drive unit 295 includes a mechanism for electromagnetically driving the regulator P13 and each valve in the fluid processing unit FL shown in FIG. 10.

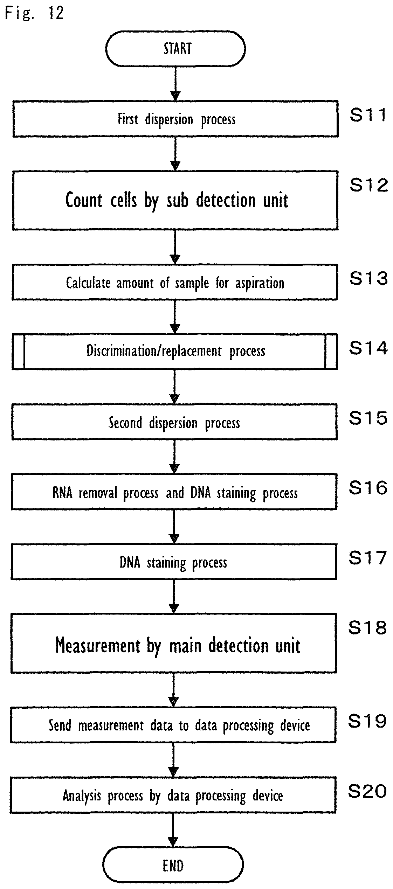

FIG. 12 is a flow chart showing the analysis operation performed by the cancer information providing apparatus 1.

When the cancer information providing apparatus 1 performs analysis, the sample container 4 which holds a mixture (sample) of cells collected from a subject and a stock solution with a main component of methanol is placed in the sample receiver 2a (refer to FIG. 2), and the cancer information providing apparatus 1 then starts the analysis.

When the measurement starts, the preparation control unit 28 of the measuring device 2 performs a first dispersion process on aggregated cells in the sample via the first dispersing part 12 (S11). When the first dispersion process ends, the preparation control unit 28 detects the number of analysis cells via the sub detection unit 13 (pre-measurement) (S12), and calculates the concentration of the sample from the number of analysis cells obtained in the pre-measurement and the volume of the sample supplied to the sub detection unit 13. The preparation control unit 28 then determines the required amount of sample to aspirate for the main measurement based on the calculated concentration (S13). The preparation control unit 28 then controls the discrimination/replacement unit 14 to perform the discrimination/replacement process (S14). The discrimination/replacement process is described below referring to FIG. 13.

The preparation control unit 28 then performs a second dispersion process on the aggregated cells in the sample via the second dispersion unit 16 (S15). The preparation control unit 28 then adds reagent (RNase) to the sample from the first reagent adding unit 19, heats the measurement sample container 5 which contains the sample via the reaction unit 18, and performs the RNA removal process on the analysis cells in the measurement sample container 5 (S16). The preparation control unit 28 then adds reagent (stain) to the sample from the second reagent adding unit 20, heats the measurement sample container 5 which contains the sample via the reaction unit 18, and performs the DNA staining process on the analysis cells in the measurement sample container 5 (S17).

The preparation control unit 28 controls the sample aspirating unit 21 to aspirate the measurement sample that has been processed for DNA staining, moves the aspirated measurement sample to the main detection unit 25, and the measurement control unit 25 controls the main detection unit 22 to perform the main measurement of the cells in the measurement sample. The measurement control unit 25 transmits the measurement data obtained in the main measurement to the data processing device 3 (S19). When the data processing device 3 receives the measurement data from the measurement device 2, the analysis process is performed based on the received measurement data (S20), and the analysis results are shown in the display unit 32.

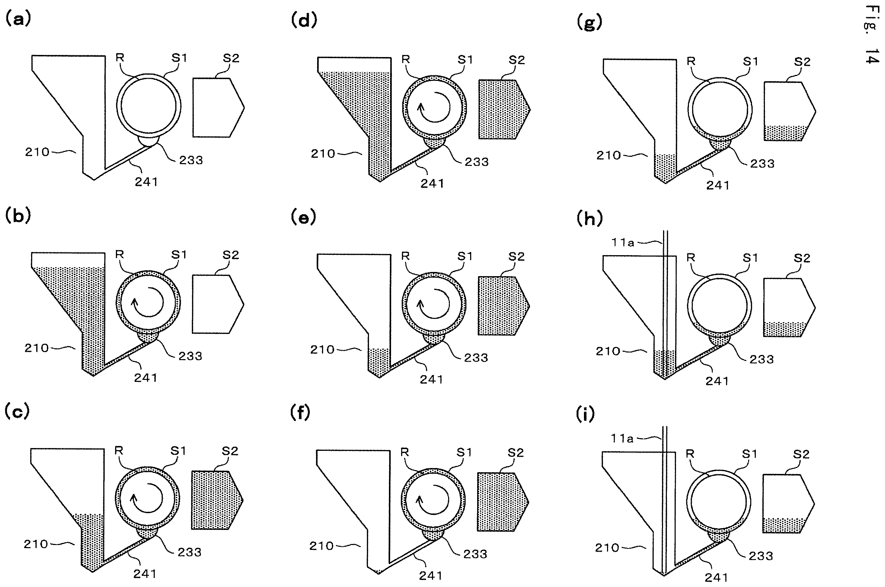

FIG. 13 is a flow chart showing the discrimination/replacement process, and FIG. 14(a) through (i) schematically shows the condition of the liquid in the receiving part 210 and spaces S1 and S2.

When the discrimination/replacement process starts, the filter member F and the piston 160 are in the condition indicated in FIG. 9(c), and the interior of the receiving part 210 and spaces S1 and S2 are washed. Referring to the washing operation in FIG. 10, dilution liquid is supplied into the spaces S1 and S2 through the holes H23 and H33, respectively, and washing liquid and diluting liquid are respectively supplied into the receiving part 210 through the holes H11 and H12. The waste liquid in the space S1 is moved to the receiving part 210 through the holes H22 and H14, and the waste liquid in the receiving part 210 is discarded through the holes H13, H15, and H16, whereas the waste liquid in the space S2 is discarded through the holes H31 and H34. Hence, the condition of the liquid is as shown in FIG. 14(a).

The preparation control unit 28 then closes the valves V11 through V15, and V21 through V26, then closes the flow path on the air release side of the valve V16, and closes the flow path on the positive pressure source P12 side of the valve V17, then starts rotation of the stirrer R. The preparation control unit 28 then fills the space S1 with diluting liquid (S102).

Specifically, the valve V24 is first opened, then the diluting liquid is supplied through the hole H23 into the space S1, in step S102. The diluting liquid flows through the flow path 241 into the receiving part 210 at this time. When a predetermined time has elapsed after the liquid surface reaches the height of the pin 212, the valve V24 is closed and the diluting liquid supply operation stops. The liquid surface thus attains the condition shown in FIG. 14(b). The valves V13 and V15 are then opened, and the diluting liquid in the space S1 and the receiving part 210 is aspirated through the filter F4 to the space S2 by applying a negative pressure in the space S2 through the hole H31 via the negative pressure source P11. When the space S2 is filled with diluting liquid, the valves V13 and V15 are closed. The diluting liquid therefore fills the space S2 as shown in FIG. 14(c).

The preparation control unit 28 then aspirates the sample from the sample receiving part 12a of the first dispersion unit 12 via the sample pipette unit 11, the amount of sample aspirated having been determined in step S13 of FIG. 12 (S103). The preparation control unit 28 then inserts the pipette 11a from above the top plate 120 into the receiving part 210 through the hole 120b and insertion opening 211, and discharges the sample aspirated in S103 into the receiving part 210. (S104). The liquid surface thus attains the condition shown in FIG. 14(d).

The preparation control unit 28 then applies negative pressure in the space S1, and starts aspirating the liquid (diluting liquid and sample) in the receiving part 210 and the space S1. Specifically, the valves V13 and V15 are then opened, and the liquid in the space S1 and the receiving part 210 is aspirated through the filter F4 to the space S2 by applying a negative pressure in the space S2 via the negative pressure source P11. When after a predetermined time has elapsed after the liquid surface in the receiving part 210 reaches the height of the pin 213 (S106: YES) as shown in FIG. 14(e), the preparation control unit 28 then closes the valves V13 and V15 and stops the aspiration via the negative pressure (S107). The liquid surface thus attains the condition shown in FIG. 14(f).

The preparation control unit 28 then applies a reverse pressure (positive pressure) within the space S2, and removes the cells aggregated in the holes of the filter F4 and the cells adhered to the surface of the filter F4 on the space S1 side into the space S1 (S108). Specifically, the flow path is opened on the positive pressure source P12 side of the valve V17, and the cells are extruded into the space S1 by applying a positive pressure within the space S2 via the positive pressure source P12. When the extrusion via reverse pressure ends, the flow path is closed on the positive pressure source P12 side of the valve V17.

The preparation control unit 28 then supplies the diluting liquid to the receiving part 210 when the processes of S105 through S108 are performed a first time or a second time (S110). Specifically, the valve V24 is opened, and then the diluting liquid is supplied through the hole H23 into the space S1. The diluting liquid flows through the flow path 241 into the receiving part 210 at this time. When a predetermined time has elapsed after the liquid surface reaches the height of the pin 212, the valve V24 is closed and the diluting liquid supply operation stops. The liquid surface thus attains the condition shown in FIG. 14(d). The process then returns to S105 and the processes of S105 through S108 are repeated three times.

The stock solution mainly composed of methanol contained in the sample is thus replaced with diluting liquid, and foreign matter and cells other than analysis cells included in the sample are discriminated. A liquid concentrate of analysis cells is thus generated in the space S1.

When the processes of S105 through S108 are repeated three times (S109: YES), the preparation control unit 28 then releases the air in the space S2. Specifically, from the condition of the liquid level shown in FIG. 14(f) the liquid in the space S1 is moved to the receiving part 210 side by opening the valve V16 on the flow path on the air release side of the valve V17, and applying atmospheric pressure in space S2. When the liquid surface in the receiving part 210 reaches the height of the pin 213 (S112: YES), the preparation control unit 28 then closes the valve V16 in the flow path on the air release side of the valve V17, stops the air release in the space S2 (S113), and stops the rotation of the stirrer R (S114).

Thus, the liquid concentrate of analysis cells produced in the space S1 is moved from the space S1 to the space S2, and the liquid surface attains the condition shown in FIG. 14(g). The liquid concentrate of analysis cells is retained below the receiving part 210. The concentration of the liquid concentrate at this time highest under the receiving part 210, and decreases as the liquid flows from below the receiving part 210 toward the space S1.

The preparation control unit 28 then inserts the pipette 11a into the deepest part of the receiving part 210 through the hole 120b and insertion opening 211 from above the top plate 120 as shown in FIG. 14(h). The preparation control unit 28 aspirates the liquid concentrate retained in the deepest part of the receiving part 210 through the pipette 11a (S115). The liquid surface thus attains the condition shown in FIG. 14(i). The discrimination/replacement process then ends and the processes subsequent to S15 of FIG. 12 are performed based on the liquid concentrate aspirated by the pipette 11a in S115.

Note that in the condition shown in FIG. 14(h), some liquid concentrate remains in the space S1 and the flow path 241 as shown in FIG. 14(i) when the aspiration by the pipette 11a ends because the air is not released in the space S2.

According to the present embodiment the pipette 11a can be rapidly positioned relative to the receiving part 210 regardless of the position of the filter F4 because the receiving part 210 in which the pipette 11a aspirates and discharges the sample and the concavity 230 in which the sample is concentrated by the filter F4 are disposed at mutually separated positions in the plane of view. That is, the pipette 11a can be rapidly positioned relative to the receiving part 210 because the mechanism which concentrates the sample in the concavity 230 (piston 160 and the like) is positioned on a different track than the pipette 11a. The discharge of the sample into the receiving part 210 and the aspiration of the liquid concentrate moved to the receiving part 210 by the pipette 11a can be performed regardless of the position of the filter F4, and a sample of concentrate analysis cells can be rapidly obtained.

A mechanism is not required to draw the piston to retract the piston from the position of the receiving part during the aspiration of the liquid concentrate as in the structure disclosed in the cited Patent Publication 2 since the receiving part 210 and the concavity 230 are disposed at mutually separated positions in the plane of view. According to the present embodiment, therefore, the structure of the measuring device 2 can be simplified and the cancer information providing apparatus 1 incorporating the measuring device 2 can be rendered more compactly.

According to the present embodiment, the filter member F is arranged with the filtration surface of the filter F4 parallel to the XZ plane. Therefore, when the filtration surface of the filter F4 is arranged parallel to the vertical direction, the discrimination/replacement unit 14 can be made more compact in the horizontal direction compared to when the filtration surface of the filter F4 is arranged parallel to the horizontal direction. The measuring device 2 therefore can be more compact in the horizontal direction, and a smaller installation area is needed for the cancer information providing apparatus 1 incorporating the measuring device 2. The analysis cells adhered to the filter F4 are easily detached from the filter F4 by gravity.

According to the present embodiment, the hole H14 of the flow path 241 of the receiving part 210 is lower than the hole H22 of the flow path 241 of the concavity 230. Thus, when the interior of the space S2 is at atmospheric pressure by releasing the air in the flow path connected to the hole H32 formed in the concavity 162 through valves V16 and V17, the sample retained in the space S1 is moved to the receiving part 210 by gravity. The sample is thus moved from the concavity 230 to the receiving part 210 without providing a separate power.

According to the present embodiment, the liquid concentrate of analysis cells held in the space S1 can be moved from the space S1 to the receiving part 210 through the flow path 241 because the hole H22 is provided at a lowest position in the concavity 230.

According to the present embodiment, the receiving part 210 is configured so that the interior part gradually narrows in the depth direction, the hole H14 is positioned in the deep part of the receiving part 210, and the pipette 11a for aspirating concentrated sample is inserted at a position at the deepest part of the receiving part 210. In this way the liquid concentrate of analysis cells can be efficiently collected in the receiving part 210, and the liquid concentrate of analysis cells retained in the receiving part 210 can be smoothly aspirated.

According to the present embodiment, the filter member F (filter F4) is fixed between the concavity 230 and the concavity 162. The sample held in the space S1 formed by the concavity 230 is moved to the space S3 by applying a negative pressure to the space S2 formed in the concavity 162 via the negative pressure source P11. The structure of the measuring device 2 can therefore be simplified because it is unnecessary to move the filter member F (filter F4) in the sample concentration process.

According to the present embodiment a rotating sample flow is produced along the side surface of the filter F4 on the space S1 side because the stirrer R provided within the concavity 230 rotates along the side surface on the concavity 230 side. The analysis cells adhered to the filter F4 therefore can be smoothly detached from the filter F4.

According to the present embodiment the filter member F (filter F4) is inserted between the concavity 230 and the concavity 162 through the hole H120b of the top plate 120 and the insertion opening 221 of the receiving part 220. The filter F4 is disposed at a position opposing (Y axis negative direction side) the opening 231 of the concavity 230 at this time. The filter member F is a consumable part and is easily replaced through the hole 120b and insertion opening 221.

According to the present embodiment the filter member F is inserted through the hole 120b shown in FIG. 3 and the insertion opening 221 shown in FIG. 5(a) and press fit against the concavity 230 by moving the piston 160 in the Y axis positive direction. The filter member F (filter F4) is thus fixedly attached as shown in FIG. 9(c).

Although the present invention has been described by way of the above embodiment, the present invention is not limited to this embodiment and may be variously modified.

For example, although cervical epithelial cells are designated the analysis cells in the above embodiment, other epithelial cells, such as buccal cells, bladder cells, pharynx cells and epithelial cells of organs also may be used as analysis cells to determine the malignant state of the cells.

Although the measuring device 2 performs measurements of analysis cells and the data processing device 3 performs analyses based on the measurement data in the above embodiment, the present invention is not limited to this arrangement inasmuch as these two devices may be combined in an integrated apparatus so as to combine the measurement and analysis of analysis cells.

In the above embodiment, preparation of a measurement sample is performed by the preparation control unit 28, sub detection unit 13, signal processing unit 27, and preparation device 29 as shown in FIG. 11, and measurement of the measurement sample is performed by the measurement control unit 25, main detection unit 22, and signal processing unit 24. However, the present invention is not limited to this arrangement inasmuch as the device for performing the preparation of the measurement sample and the device for performing measurements may be separate devices.

In the above embodiment, a barcode or RFID for identifying the individual filter member F may be adhered to the top of the filter member F. The precision of the filter member F can be easily managed and suitable replacement of the filter member F can be performed in this way.

Note that the present invention is not limited to the above described embodiments and may be variously modified insofar as such modification are within the scope of the claims.

## Claims

1. A sample preparation apparatus, comprising:
a first receiving part (210) configured to accept a pipette (11) and to receive a sample discharged from the pipette (11);
a second receiving part (220, S1) disposed at a position separate from the first receiving part (210) in the plane of view;
a filter part (F) configured to retain cells to be analyzed within the second receiving part (220, S1); **characterised in that**:
the filter part (F) is arranged to intervene between the second receiving part (220, S1) and a third receiving part (S2); so that the third receiving part (S2) is disposed opposite the second receiving part (220, S1),
a flow path (241) configured to connect the first receiving part (210) and the second receiving part (220, S1);
a first moving means arranged to apply pressure so as to move the sample that has been received at the first receiving part (210) to the filter part (F) through the flow path (241) and the second receiving part (220, S1), and move the components other than the cells to be analyzed to the third receiving part (S2) through the filter part (F); and
a second moving means arranged to apply pressure so as to move the cells to be analyzed in the second receiving part (220, S1) from the second receiving part (220, S1) to the first receiving part (210) through the flow path (241).

2. The sample preparation apparatus of claim 1, wherein
the sample preparation apparatus further comprises a detaching means (14) for detaching from the filter part (F) the cells to be analyzed that are adhered to the filter part (F).

3. The sample preparation apparatus of claim 1 or 2, wherein
the filter part (F) is disposed so that a filtration surface is substantially parallel to the vertical direction.

4. The sample preparation apparatus of any of claims 1 to 3, wherein
the positions of the first receiving part (210), the second receiving part (220, S1) and the flow path (241) are adjustable so that a first connective aperture of the flow path (241) at the first receiving part (210) is lower than a second connective aperture of the flow path (241) at the second receiving part (220, S1), as the second moving means (28).

5. The sample preparation apparatus of claim 4, wherein
the second moving means comprises a vent (H16) for releasing the atmosphere within the third receiving part, and a valve for opening and closing the vent, and moves the sample containing the cells to be analyzed present within the second receiving part (220, S1) to the first receiving part (210) by opening the vent (H16) via the valve (V25).

6. The sample preparation apparatus of claim 4 or 5, wherein
the second connective aperture is disposed at the lowest position of the second receiving part (220, S1).

7. The sample preparation apparatus of any of claims 4 to 6, wherein
the first receiving part (210) is shaped so that the inner part gradually becomes narrower in the depth direction;
the first connective aperture is disposed at a position in the deepest part of the first receiving part; and
the pipette (11) configured to aspirate the concentrated sample is inserted at the position in the deepest part of the first receiving part (210).

8. The sample preparation apparatus of any of claims 1 to 7, wherein
the filter part (F) is fixedly attached between the second receiving part (220, S1) and the third receiving part (S2), and
the first moving means comprises a pressure application part for applying pressure within the third receiving part (S2) to move the sample contained in the second receiving part (220, S1) through the filter part (F) to the third receiving part (S2).

9. The sample preparation apparatus of any of claims 1 to 8, wherein
a rotary member which rotates along the side surface of the second receiving part (220, S1) side of the filter part (F) is provided within the second receiving part (220, S1).

10. The sample preparation apparatus of any of claims 1 to 9, wherein
an insertion aperture to which the filter part (F) is inserted between the second receiving part (220, S1) and the third receiving part (S2).

11. The sample preparation apparatus of claim 10, further comprising
a pressure affixing mechanism (160) configured to press the filter part (F) inserted from the insertion aperture to the second receiving part (220, S1) and to affix the filter part (F) to the filter part.

12. The sample preparation apparatus of any of claims 1 to 11, wherein
the sample comprises a biological sample collected from uterine cervix, and the cells to be analyzed are cervical epithelial cells.

13. The sample preparation apparatus of any of claims 1 to 12, wherein
a liquid surface sensor unit (121, 122) for detecting the surface of a liquid accommodated in the first receiving part (210), and the first receiving part (210) further comprises a sensor (121, 122) that is connected to the liquid surface sensor unit (121, 122).

14. The sample preparation apparatus of any of claims 1 to 13, wherein
a liquid surface sensor unit (121, 122) for detecting the surface of a liquid accommodated in the first receiving part (210), and the first receiving part (210) further comprises a first sensor (121) and a second sensor (122) that are connected to the liquid surface sensor unit, wherein the first sensor (121) is disposed at the top of the second sensor (122) in a vertical direction.

15. A sample preparation method comprising:
receiving a sample containing cells to be analyzed in a first receiving part (210) for accommodating a sample discharged from a pipette; arranging a filter part (F) to intervene between a second receiving part (220, S1) and a third receiving part (S2), so that the third receiving part (S2) is disposed opposite the second receiving part (220, S1);
wherein the second receiving part (220, S1) is disposed at a position separated from the first receiving part (210) in the plane of view and wherein the first receiving part (210) and the second receiving part (220, S1) are connected by a flow path (241);
applying pressure so as to move the sample that has been received at the first receiving part (210) to the filter part (F) through the flow path (241) and the second receiving part (220, S1), and move the components other than the cells to be analyzed to the third receiving part (S2) through the filter part (F);
retaining the cells to be analysed within the second receiving part (220, S1) using the filter part (F); and
applying pressure so as to move the cells to be analyzed in the second receiving part (220, S1) from the second receiving part (220, S1) to the first receiving part (210) through the flow path (241).

## Patentansprüche

1. Probenvorbereitungsvorrichtung, umfassend:
ein erstes Aufnahmeteil (210), das zum Annehmen einer Pipette (11) und zum Aufnehmen einer von der Pipette (11) abgegebenen Probe konfiguriert ist;
ein zweites Aufnahmeteil (220, S1), das an einer von dem ersten Aufnahmeteil (210) getrennten Position in der Sichtebene angeordnet ist;
ein Filterteil (F), das zum Halten von zu analysierenden Zellen in dem zweiten Aufnahmeteil (220, S1) konfiguriert ist; **dadurch gekennzeichnet, dass**:
das Filterteil (F) eingerichtet ist, um zwischen dem zweiten Aufnahmeteil (220, S1) und einem dritten Aufnahmeteil (S2) zu intervenieren; sodass das dritte Aufnahmeteil (S2) gegenüber dem zweiten Aufnahmeteil (220, S1) angeordnet ist,
einen Strömungsweg (241), der zum Verbinden des ersten Aufnahmeteils (210) und des zweiten Aufnahmeteils (220, S1) konfiguriert ist;
ein erstes Bewegungsmittel, das zum Beaufschlagen von Druck eingerichtet ist, um die am ersten Aufnahmeteil (210) aufgenommene Probe durch den Strömungsweg (241) und den zweiten Aufnahmeteil (220, S1) zu dem Filterteil (F) zu bewegen und um die anderen Komponenten als die zu analysierenden Zellen durch das Filterteil (F) zum dritten Aufnahmeteil (S2) zu bewegen; und
ein zweites Bewegungsmittel, das zum Beaufschlagen von Druck eingerichtet ist, um die zu analysierenden Zellen in dem zweiten Aufnahmeteil (220, S1) vom zweiten Aufnahmeteil (220, S1) durch den Strömungsweg (241) zum ersten Aufnahmeteil (210) zu bewegen.

2. Probenvorbereitungsvorrichtung nach Anspruch 1, wobei
die Probenvorbereitungsvorrichtung weiter ein Ablösemittel (14) zum Ablösen der zu analysierenden Zellen, die an dem Filterteil (F) haften, von dem Filterteil (F) umfasst.

3. Probenvorbereitungsvorrichtung nach Anspruch 1 oder 2, wobei
das Filterteil (F) derart angeordnet ist, dass eine Filtrationsfläche im Wesentlichen parallel zur vertikalen Richtung verläuft.

4. Probenvorbereitungsvorrichtung nach einem der Ansprüche 1 bis 3, wobei
die Positionen des ersten Aufnahmeteils (210), des zweiten Aufnahmeteils (220, S1) und des Strömungswegs (241) einstellbar sind, sodass eine erste Verbindungsöffnung des Strömungswegs (241) am ersten Aufnahmeteil (210) niedriger als eine zweite Verbindungsöffnung des Strömungswegs (241) an dem zweiten Aufnahmeteil (220, S1) als das zweite Bewegungsmittel (28) ist.

5. Probenvorbereitungsvorrichtung nach Anspruch 4, wobei
das zweite Bewegungsmittel eine Entlüftung (H16) zum Freigeben der Atmosphäre innerhalb des dritten Aufnahmeteils und ein Ventil zum Öffnen und Schließen der Entlüftung umfasst und die Probe, welche die zu analysierenden Zellen enthält, die im zweiten Aufnahmeteil (220, S1) vorhanden sind, zum ersten Aufnahmeteil (210) durch Öffnen der Entlüftung (H16) über das Ventil (V25) bewegt.

6. Probenvorbereitungsvorrichtung nach Anspruch 4 oder 5, wobei
die zweite Verbindungsöffnung an der untersten Position des zweiten Aufnahmeteils (220, S1) angeordnet ist.

7. Probenvorbereitungsvorrichtung nach einem der Ansprüche 4 bis 6, wobei
das erste Aufnahmeteil (210) derart geformt ist, dass das Innenteil in der Tiefenrichtung allmählich schmaler wird;
die erste Verbindungsöffnung an einer Position im tiefsten Teil des ersten Aufnahmeteils angeordnet ist; und
die zum Ansaugen der konzentrierten Probe konfigurierte Pipette (11) an der Position im tiefsten Teil des ersten Aufnahmeteils (210) eingeführt wird.

8. Probenvorbereitungsvorrichtung nach einem der Ansprüche 1 bis 7, wobei
das Filterteil (F) ortsfest zwischen dem zweiten Aufnahmeteil (220, S1) und dem dritten Aufnahmeteil (S2) angebracht ist, und
das erste Bewegungsmittel ein Druckbeaufschlagungsteil zum Beaufschlagen von Druck innerhalb des dritten Aufnahmeteils (S2) umfasst, um die in dem zweiten Aufnahmeteil (220, S1) enthaltene Probe durch das Filterteil (F) zum dritten Aufnahmeteil (S2) zu bewegen.

9. Probenvorbereitungsvorrichtung nach einem der Ansprüche 1 bis 8, wobei
ein Drehelement, das sich entlang der Seitenfläche der Seite des zweiten Aufnahmeteils (220, S1) des Filterteils (F) dreht, innerhalb des zweiten Aufnahmeteils (220, S1) bereitgestellt ist.

10. Probenvorbereitungsvorrichtung nach einem der Ansprüche 1 bis 9, wobei
eine Einführungsöffnung, in die das Filterteil (F) zwischen dem zweiten Aufnahmeteil (220, S1) und dem dritten Aufnahmeteil (S2) eingeführt wird.

11. Probenvorbereitungsvorrichtung nach Anspruch 10, weiter umfassend
einen Druckbefestigungsmechanismus (160), der konfiguriert ist, um das von der Einführungsöffnung eingeführte Filterteil (F) in das zweite Aufnahmeteil (220, S1) zu pressen und das Filterteil (F) am Filterteil zu befestigen.

12. Probenvorbereitungsvorrichtung nach einem der Ansprüche 1 bis 11, wobei
die Probe eine biologische Probe umfasst, die aus dem Gebärmutterhals entnommen wurde, und die zu analysierenden Zellen Cervix-Epithelzellen sind.

13. Probenvorbereitungsvorrichtung nach einem der Ansprüche 1 bis 12, wobei
eine Flüssigoberflächen-Sensoreinheit (121, 122) zum Erfassen der Oberfläche einer Flüssigkeit, die in dem ersten Aufnahmeteil (210) untergebracht ist, und das erste Aufnahmeteil (210) weiter einen Sensor (121, 122) umfasst, der mit der Flüssigoberflächen-Sensoreinheit (121, 122) verbunden ist.

14. Probenvorbereitungsvorrichtung nach einem der Ansprüche 1 bis 13, wobei
eine Flüssigkeitsoberflächen-Sensoreinheit (121, 122) zum Erfassen der Oberfläche einer Flüssigkeit, die in dem ersten Aufnahmeteil (210) untergebracht ist, und das erste Aufnahmeteil (210) weiter einen ersten Sensor (121) und einen zweiten Sensor (122) umfasst, die mit der Flüssigkeitsoberflächen-Sensoreinheit verbunden sind, wobei der erste Sensor (121) in vertikaler Richtung oben auf dem zweiten Sensor (122) angeordnet ist.

15. Probenvorbereitungsverfahren, umfassend:
Aufnehmen einer Probe, die zu analysierende Zellen enthält, in einem ersten Aufnahmeteil (210) zum Unterbringen einer aus einer Pipette abgegebenen Probe; Anordnen eines Filterteils (F) zum Intervenieren zwischen einem zweiten Aufnahmeteil (220, S1) und einem dritten Aufnahmeteil (S2), sodass das dritte Aufnahmeteil (S2) dem zweiten Aufnahmeteil (220, S1) gegenüber angeordnet ist;
wobei das zweite Aufnahmeteil (220, S1) an einer Position angeordnet ist, die von dem ersten Aufnahmeteil (210) in der Sichtebene getrennt ist, und wobei das erste Aufnahmeteil (210) und das zweite Aufnahmeteil (220, S1) über einen Strömungsweg (241) verbunden sind;
Beaufschlagen von Druck, um die am ersten Aufnahmeteil (210) aufgenommene Probe durch den Strömungsweg (241) und den zweiten Aufnahmeteil (220, S1) zu dem Filterteil (F) zu bewegen und um die anderen Komponenten als die zu analysierenden Zellen durch den Filterteil (F) zum dritten Aufnahmeteil (S2) zu bewegen;
Halten der zu analysierenden Zellen innerhalb des zweiten Aufnahmeteils (220, S1) unter Verwendung des Filterteils (F); und
Beaufschlagen von Druck, um die zu analysierenden Zellen in dem zweiten Aufnahmeteil (220, S1) vom zweiten Aufnahmeteil (220, S1) durch den Strömungsweg (241) zum ersten Aufnahmeteil (210) zu bewegen.

## Revendications

1. Appareil de préparation d'échantillon, comprenant :
une première partie de réception (210) configurée pour accepter une pipette (11) et pour recevoir un échantillon déchargé à partir de la pipette (11) ;
une deuxième partie de réception (220, S1) disposée à une position séparée de la première partie de réception (210) dans le plan de vue ;
une partie de filtration (F) configurée pour retenir des cellules à analyser à l'intérieur de la deuxième partie de réception (220, S1) ; **caractérisé en ce que** :
la partie de filtration (F) est agencée pour s'interposer entre la deuxième partie de réception (220, S1) et une troisième partie de réception (S2) ; de sorte que la troisième partie de réception (S2) est disposée à l'opposé de la deuxième partie de réception (220, S1),
un trajet d'écoulement (241) configuré pour connecter la première partie de réception (210) et la deuxième partie de réception (220, S1) ;
un premier moyen de déplacement agencé pour appliquer une pression afin de déplacer l'échantillon qui a été reçu au niveau de la première partie de réception (210) vers la partie de filtration (F) à travers le trajet d'écoulement (241) et la deuxième partie de réception (220, S1), et de déplacer les composants autres que les cellules à analyser vers la troisième partie de réception (S2) à travers la partie de filtration (F) ; et
un second moyen de déplacement agencé pour appliquer une pression afin de déplacer les cellules à analyser dans la deuxième partie de réception (220, S1) à partir de la deuxième partie de réception (220, S1) vers la première partie de réception (210) à travers le trajet d'écoulement (241).

2. Appareil de préparation d'échantillon selon la revendication 1, dans lequel
l'appareil de préparation d'échantillon comprend en outre un moyen de détachement (14) pour détacher à partir de la partie de filtration (F) les cellules à analyser qui adhèrent à la partie de filtration (F).

3. Appareil de préparation d'échantillon selon la revendication 1 ou 2, dans lequel
la partie de filtration (F) est disposée de façon qu'une surface de filtration soit sensiblement parallèle à la direction verticale.

4. Appareil de préparation d'échantillon selon l'une quelconque des revendications 1 à 3, dans lequel
les positions de la première partie de réception (210), de la deuxième partie de réception (220, S1) et du trajet d'écoulement (241) sont ajustables de sorte qu'une première ouverture de connexion du trajet d'écoulement (241) au niveau de la première partie de réception (210) est plus basse qu'une seconde ouverture de connexion du trajet d'écoulement (241) au niveau de la deuxième partie de réception (220, S1), comme le second moyen de déplacement (28).

5. Appareil de préparation d'échantillon selon la revendication 4, dans lequel
le second moyen de déplacement comprend un évent (H16) pour libérer l'atmosphère à l'intérieur de la troisième partie de réception, et une valve pour ouvrir et fermer l'évent, et déplace l'échantillon contenant les cellules à analyser présentes à l'intérieur de la deuxième partie de réception (220, S1) vers la première partie de réception (210) en ouvrant l'évent (H16) via la valve (V25).

6. Appareil de préparation d'échantillon selon la revendication 4 ou 5, dans lequel
la seconde ouverture de connexion est disposée à la position la plus basse de la deuxième partie de réception (220, S1).

7. Appareil de préparation d'échantillon selon l'une quelconque des revendications 4 à 6, dans lequel
la première partie de réception (210) est formée de façon que la partie interne se rétrécisse progressivement dans la direction de la profondeur ;
la première ouverture de connexion est disposée à une position dans la partie la plus profonde de la première partie de réception ; et
la pipette (11) configurée pour aspirer l'échantillon concentré est insérée au niveau de la position dans la partie la plus profonde de la première partie de réception (210).

8. Appareil de préparation d'échantillon selon l'une quelconque des revendications 1 à 7, dans lequel
la partie de filtration (F) est fixée à demeure entre la deuxième partie de réception (220, S1) et la troisième partie de réception (S2), et
le premier moyen de déplacement comprend une partie d'application de pression pour appliquer une pression à l'intérieur de la troisième partie de réception (S2) pour déplacer l'échantillon contenu dans la deuxième partie de réception (220, S1) à travers la partie de filtration (F) vers la troisième partie de réception (S2).

9. Appareil de préparation d'échantillon selon l'une quelconque des revendications 1 à 8, dans lequel
un élément rotatif qui tourne le long de la surface latérale du côté de la deuxième partie de réception (220, S1) de la partie de filtration (F) est fourni à l'intérieur de la deuxième partie de réception (220, S1).

10. Appareil de préparation d'échantillon selon l'une quelconque des revendications 1 à 9, dans lequel
une ouverture d'insertion dans laquelle la partie de filtration (F) est insérée entre la deuxième partie de réception (220, S1) et la troisième partie de réception (S2).

11. Appareil de préparation d'échantillon selon la revendication 10, dans lequel
un mécanisme de fixation de pression (160) configuré pour presser la partie de filtration (F) insérée à partir de l'ouverture d'insertion vers la deuxième partie de réception (220, S1) et pour fixer la partie de filtration (F) à la partie de filtration.

12. Appareil de préparation d'échantillon selon l'une quelconque des revendications 1 à 11, dans lequel
l'échantillon comprend un échantillon biologique collecté à partir du col de l'utérus, et les cellules à analyser sont des cellules épithéliales du col de l'utérus.

13. Appareil de préparation d'échantillon selon l'une quelconque des revendications 1 à 12, dans lequel
une unité de détection de surface de liquide (121, 122) pour détecter la surface d'un liquide logé dans la première partie de réception (210), et la première partie de réception (210) comprend en outre un capteur (121, 122) qui est connecté à l'unité de détection de surface de liquide (121, 122).

14. Appareil de préparation d'échantillon selon l'une quelconque des revendications 1 à 13, dans lequel
une unité de détection de surface de liquide (121, 122) pour détecter la surface d'un liquide logé dans la première partie de réception (210), et la première partie de réception (210) comprend en outre un premier capteur (121) et un second capteur (122) qui sont connectés à l'unité de détection de surface de liquide, dans lequel le premier capteur (121) est disposé en haut du second capteur (122) dans une direction verticale.

15. Procédé de préparation d'échantillon comprenant :
la réception d'un échantillon contenant des cellules à analyser dans une première partie de réception (210) pour loger un échantillon déchargé à partir d'une pipette; l'agencement d'une partie de filtration (F) pour qu'elle s'interpose entre une deuxième partie de réception (220, S1) et une troisième partie de réception (S2), de sorte que la troisième partie de réception (S2) est disposée à l'opposé de la deuxième partie de réception (220, S1) ;
dans lequel la deuxième partie de réception (220, S1) est disposée à une position séparée de la première partie de réception (210) dans le plan de vue et dans lequel la première partie de réception (210) et la deuxième partie de réception (220, S1) sont connectées par un trajet d'écoulement (241) ;
l'application d'une pression afin de déplacer l'échantillon qui a été reçu au niveau de la première partie de réception (210) vers la partie de filtration (F) à travers le trajet d'écoulement (241) et la deuxième partie de réception (220, S1), et de déplacer les composants autres que les cellules à analyser vers la troisième partie de réception (S2) à travers la partie de filtration (F) ;
la rétention des cellules à analyser à l'intérieur de la deuxième partie de réception (220, S1) en utilisant la partie de filtration (F) ; et
l'application d'une pression afin de déplacer les cellules à analyser dans la deuxième partie de réception (220, S1) à partir de la deuxième partie de réception (220, S1) vers la première partie de réception (210) à travers le trajet d'écoulement (241).
